# EUROPEAN PATENT SPECIFICATION

(11) **EP 0 704 655 B1**
(45) Date of publication and mention of the grant of the patent: **24.03.1999**
(21) Application number: 95115346.9
(22) Date of filing: 28.09.1995
(51) Int. Cl.: F21V 8/00, G02B 6/28, G02B 6/42

(54) **Light guide lighting system for forming a thin lighting device**
Lichtleiter-Beleuchtungssystem zur Herstellung eines dünnen Beleuchtungselements
Système d'éclairage à guide d'onde pour produire un appareil d'éclairage mince

(30) Priority: 30.09.1994 IT TO940773
(43) Date of publication of application: 03.04.1996
(73) Proprietor: MAGNETI MARELLI S.p.A., 20145 Milano (IT)
(72) Inventor: Masuelli, Stefania, I-10043 Orbassano (IT); Perlo, Piero, I-12048 Sommariva Del Bosco (IT)
(74) Representative: Plebani, Rinaldo

(56) References cited:
- EP-A- 0 215 279
- EP-A- 0 594 089
- US-A- 4 172 631
- US-A- 4 765 701
- US-A- 4 872 739
- US-A- 5 046 805

## Description

The present invention relates to a lighting system substantially comprising a pair of light guides so formed as to present a very small dimension in one direction, and which provides for emitting light in that direction; the light being generated by a source located on one side or on either side of the light guides, and which emits light in a direction perpendicular to the former.

US Patent n. 5 235 443 relates to a liquid crystal device of the aforementioned type, which substantially comprises a pair of light guides made of rigid, transparent material and defining a number of facing surfaces; a layer of Colysteric liquid crystal between the surfaces; and a light source located on one side of the guides, and generating light in a direction forming a predetermined angle with said facing surfaces.

The above device substantially constitutes a polarized light generator, the polarizing state of which may be appropriately controlled by means of liquid crystals.

Liquid crystal devices of the type described in the above patent are seldom employable for forming an actual lighting device.

The intensity distribution of the light generated by such devices, in fact, can only be varied within a very small range, and the divergence of the beam so formed fails to fall within the range of most commonly used lighting devices.

Moreover, the reliability of such devices is poor, due to the marked variation in the physical-optical characteristics of Colysteric liquid crystals alongside a variation in temperature, even within the normal temperature range of most lighting device applications.

Finally, liquid crystal lighting devices involve a painstaking manufacturing process which therefore makes them unsuitable for this type of application.

It is an object of the present invention to provide a lighting system, in particular for forming lighting devices, designed to overcome the aforementioned drawbacks, and which first and foremost provides for achieving devices presenting a very small dimension in one direction and therefore particularly suitable for applications - such as certain automotive lighting applications - wherein only a limited amount of space is available for housing the device. It is a further object of the present invention to provide a system of the aforementioned type capable of generating light with a predetermined intensity distribution, and wherein the divergence of the resulting beam is adjustable as required. Yet a further object of the present invention is to provide a system of the aforementioned type which is easy to produce and presents a high degree of in-service reliability.

According to the present invention, there is provided a lighting system substantially comprising:
at least a pair of light guides defined between a number of pairs of facing surfaces; and
a light source for generating a stream of substantially parallel rays, the direction of said rays forming a predetermined angle with the surfaces in said pairs;
characterized in that, between the facing surfaces in each said pair, there is provided a partly transparent material, so that each pair of facing surfaces defines the interface between said light guides and said material; the structural characteristics of said material differing from those of the material between the facing surfaces in the following pair in the direction of said rays, so that a first portion of the light impinging on said facing surfaces in each pair is transmitted to the following pair of facing surfaces substantially in the direction of said rays, whereas a predetermined second portion of said light is reflected in a direction substantially perpendicular to the direction of said rays.

A number of non-limiting embodiments of the lighting system according to the present invention will be described by way of example with reference to the accompanying drawings, in which:
Figure 1 shows a longitudinal section of the main components of a first embodiment of the lighting system according to the present invention;
Figure 2 shows the same section as in Figure 1, of a further embodiment of the system according to the present invention;
Figures 3 and 4 show sections of two further embodiments of a number of system components;
Figures 5 and 6 show a front view and diametrical section respectively of a symmetrical circular lighting device based on the lighting system according to the present invention;
Figure 7 shows a longitudinal section of the main components of a further embodiment of the lighting system according to the present invention;
Figures 8 and 9 show a front view and diametrical section respectively of a symmetrical circular lighting device based on the Figure 7 embodiment of the lighting system according to the present invention;
Figure 10 shows a variation of the lighting system in Figure 7;
Figures 11 to 13 show schematic construction arrangements of the light source for the lighting system according to the present invention;
Figure 14 shows a possible variation of the system according to the present invention.

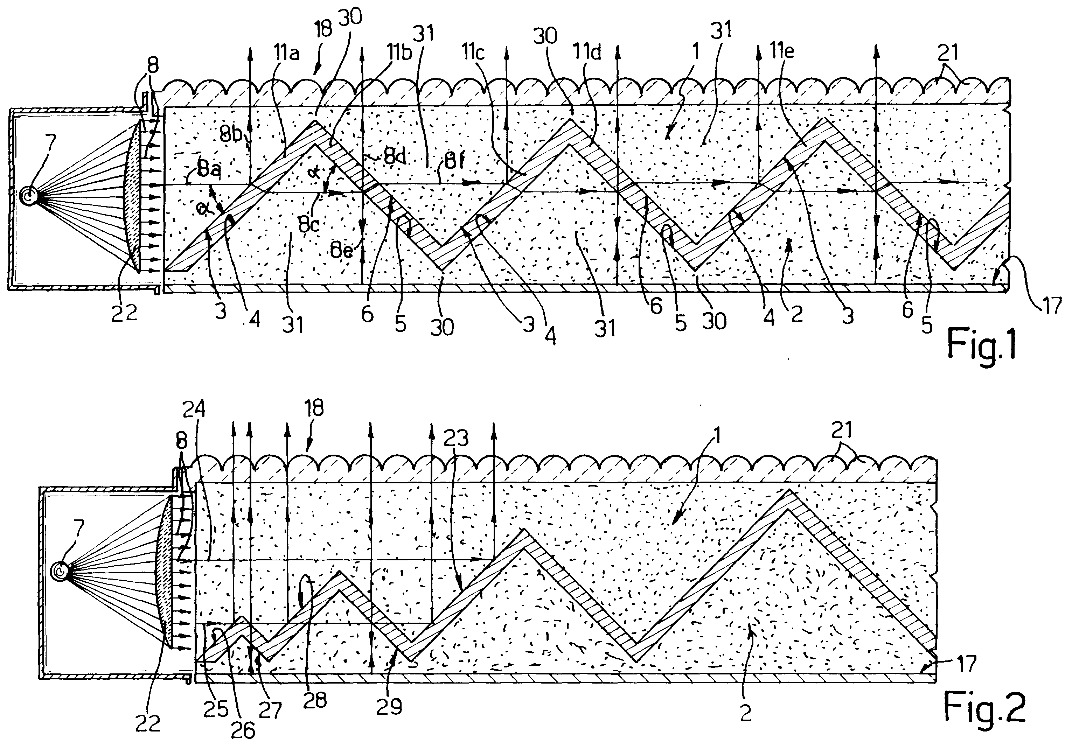

With reference to Figure 1, the lighting system according to the present invention substantially comprises at least a pair of light guides 1 and 2 conveniently made of rigid, transparent material, e.g. thermoplastic material or glass, and defining a number of pairs of facing surfaces 3-4, 5-6, each pair defined by a surface (3 and 6) of one (1) of the light guides, and by a surface (4 and 5) of the other (2) light guide.

The system also comprises a light source 7 for generating a stream of controlled-divergence rays 8, the direction of which forms a predetermined angle α (Figure 1) with surface pairs 3,4, 5,6.

Between the facing surfaces 3-4 or 5-6 in each pair, there is provided a layer 11 of at least partly transparent material, the structural characteristics of which differ from those of the layer between the facing surfaces 5-6 in the following pair in the direction of rays 8.

The structural characteristics of the material of the layers, indicated 11a, 11b, 11c, 11d, ... in Figure 1 and interposed between the pairs of facing surfaces of the two light guides at increasing distances from source 7, may therefore be said to vary gradually with said distance, thus enabling a variation in light intensity distribution along the device as described later on.

If the pairs of facing surfaces 3-4, 5-6 of light guides 1-2 present, as shown in Figure 1, a profile in the form of an isosceles triangle with a 90° angle at the apex, layers 11a, 11b, 11c, 11d, ... form part of a single continuous strip of material interposed between the surfaces, in which case, the structural characteristics of the layers are varied in the direction of rays 8 by simply varying the thickness or by gradually varying the refraction index of the layers.

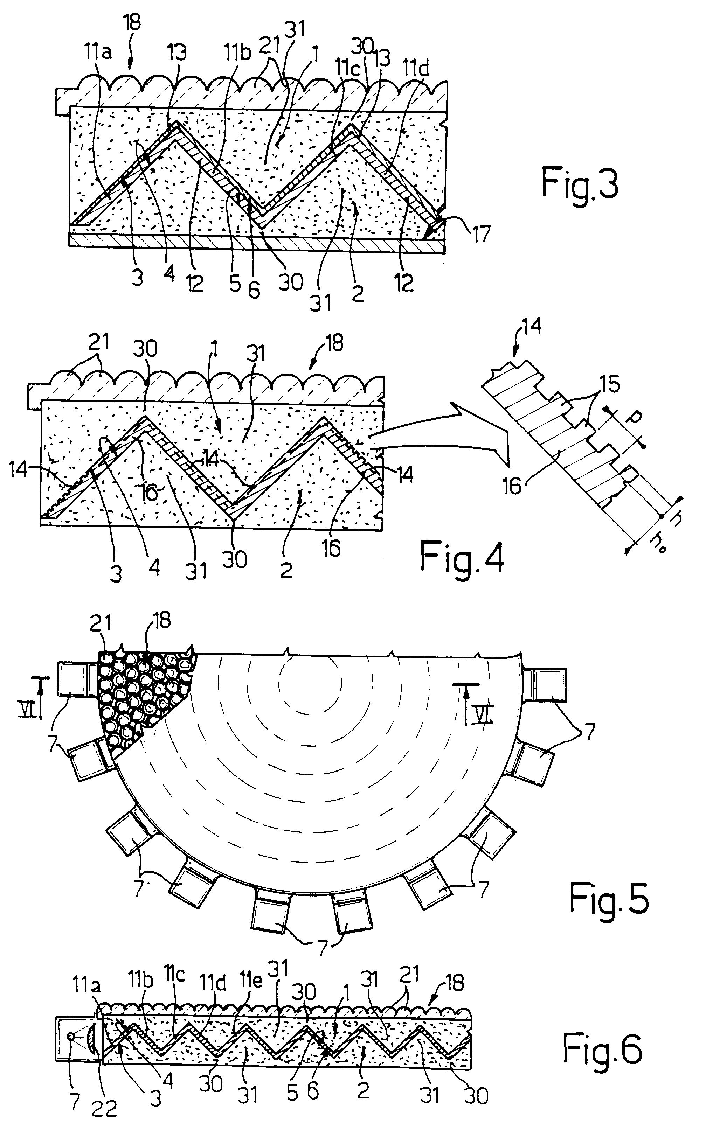

In the Figure 3 embodiment, the structural characteristics of the layers are varied by varying the reflectance of the layers, for which purpose, a layer of reflecting metal material 13 varying in thickness in the direction of rays 8 is deposited on a layer of transparent base material 12. Alternatively, and preferably, layer 13 may be deposited in known manner directly on to one of the two light guides.

Layer 11 interposed between the pairs of facing surfaces of light guides 1 and 2 may also comprise a diffraction grating 14 - as in the Figure 4 embodiment - which, as is known, substantially comprises a number of diffraction projections 15 of appropriate shape and size and which may project, for example, from a supporting layer 16 or be formed directly on surfaces 3, 4, 5 and 6 of light guides 1 and 2.

When using a diffraction grating (as in Figure 4) for the system according to the invention, the spacing p (Figure 4) of diffraction projections 15 has been found to preferably range between 0.5 and 0.7 micron, and the ratio of the height h of projections 15 to the thickness of supporting layer 16 to preferably range between 0.5 and 2.

The Figure 1 embodiment of the system according to the present invention also comprises a perfectly reflecting surface 17 located on one side of light guides 1, 2 and in a plane substantially parallel to the intersections of surfaces 4, 5 and 3,6 of light guides 1 and 2.

The lighting system also comprises an assembly 18 of microlenses substantially located in a plane parallel to that of reflecting surface 17. Assembly 18 may comprise a number of refracting or combined refracting-diffracting lenses 21 which may be arranged in any manner for receiving and producing the required divergence of rays 8 which, as described later on, are directed towards lenses 21 in a direction substantially perpendicular to their propagation direction.

Source 7 and light guides 1 and 2 may conveniently be connected by a refracting, diffracting or combined refracting-diffracting lens (or lens system) 22 interposed between source 7 and one of the smaller sides of the light guide 1-2 assembly, and which provides for so controlling the divergence of the beam entering guides 1 and 2 as to obtain, for example, a beam of substantially parallel rays 8 as shown in Figure 1.

The lighting system according to the present invention operates as follows.

For the sake of simplicity, the path of each ray inside guides 1 and 2 will be described with reference to ray 8a entering light guide 1. When this impinges on the interface between surface 3 of light guide 1 and the surface of the interposed layer 11a, a reflected ray 8b is generated substantially perpendicular to the direction of ray 8a and towards microlens assembly 18; ray 8a is also refracted at the above interface and at the following interface between surface 4 and the mating surface of layer 11a, to generate a ray 8c inside light guide 2 and directed substantially parallel to ray 8a; at the interface between surface 5 of light guide 2 and the mating surface of layer 11b, ray 8c is reflected perpendicularly to generate a ray 8e which is reflected by perfectly reflecting surface 17 to generate a ray 8d towards microlens assembly 18; and ray 8c is also refracted at the interface between surface 5 and the mating surface of layer 11b, and again at the interface between the other surface of layer 11b and surface 6 of light guide 1 to generate a ray 8f substantially parallel to ray 8a.

Ray 8f is now in the same condition as ray 8a, and is therefore reflected and refracted by the following interfaces in the same way.

A portion of the light impinging on light guides 1 and 2 is therefore reflected towards microlens assembly 18, while another portion of the same light is transmitted to the following pairs of facing surfaces of the two light guides.

The direction of rays 8b and 8d directed towards microlens assembly 18 is modified by assembly 18 to obtain an outgoing light diverging as required.

By appropriately selecting the structural characteristics of layers 11a, 11b, 11c, 11d, ... interposed between the pairs of facing surfaces of the light guides, a given ratio may be obtained between the energy of the reflected rays (e.g. 8b and 8d) and that of the rays (e.g. 8c and 8f) transmitted along the guides, so as to obtain a given light intensity distribution of the reflected rays and a predetermined light pattern to meet the requirements of a given lighting device. As already stated, the ratio of the reflected light energy to that of the transmitted light depends on the structural characteristics of the material interposed between the facing surfaces of the light guides and which may be selected accordingly. A number of such characteristics are indicated in the examples shown (refraction index of the interface materials, thickness of the layer of material interposed between the facing surfaces of the light guides, reflectance of the facing surfaces, diffraction grating design), but others not specifically dealt with herein also come within the scope of the present invention.

The Figure 2 embodiment of the lighting system according to the present invention differs from that in Figure 1 in that facing surfaces 3-4 and 5-6 of light guides 1 and 2, as opposed to being the same size, increase in size - that is, the triangular profile of the facing surfaces increases in height - in the direction of the rays. Varying the geometric characteristics of the facing surfaces of the two light guides in this way provides for varying the light intensity distribution of the system, as shown in Figure 2, and bearing in mind that certain rays, such as ray 24 impinging on interface 23, may come directly from the light source, whereas others, such as ray 25, impinge on interface 23 after first being reflected at interfaces 26, 27, 28 and 29.

The light guides in the Figure 1 and 2 embodiments may conveniently comprise a flat supporting element 30 from which project prismed portions 31, each with a profile substantially in the form of an isosceles triangle with a 45° angle at the apex, and which generate pairs of facing surfaces 3-4 and 5-6.

In the Figure 5 and 6 embodiment, prismed portions 30 and 31 are circular and coaxial, as shown clearly, in which case, provision is made for a number of light sources 7 arranged peripherally about the two light guides, and each generating light in a substantially radial direction.

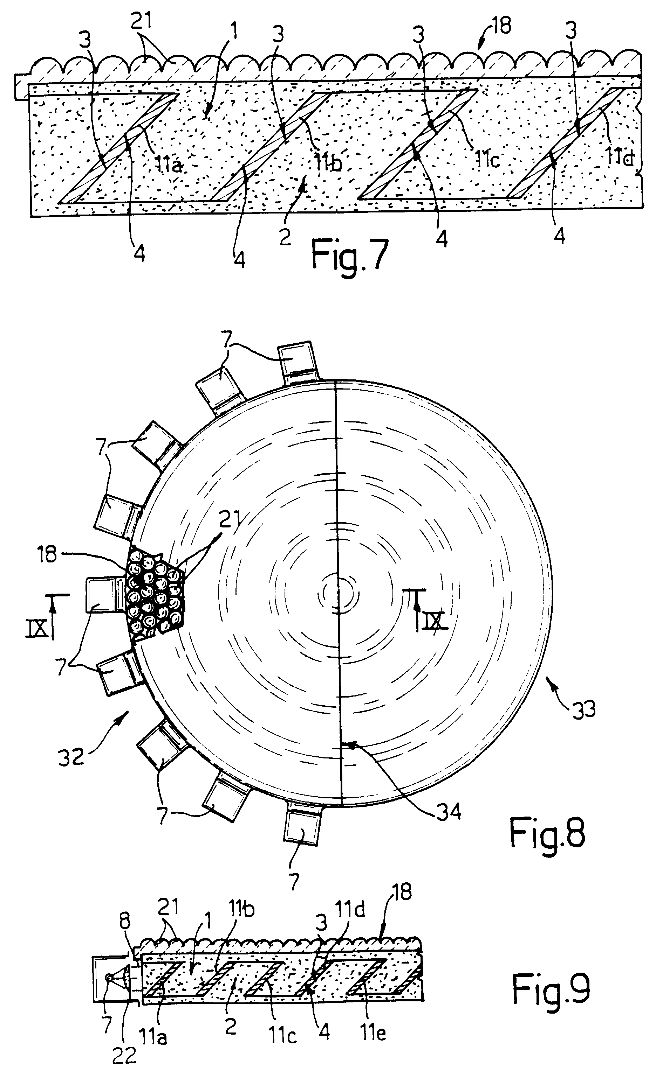

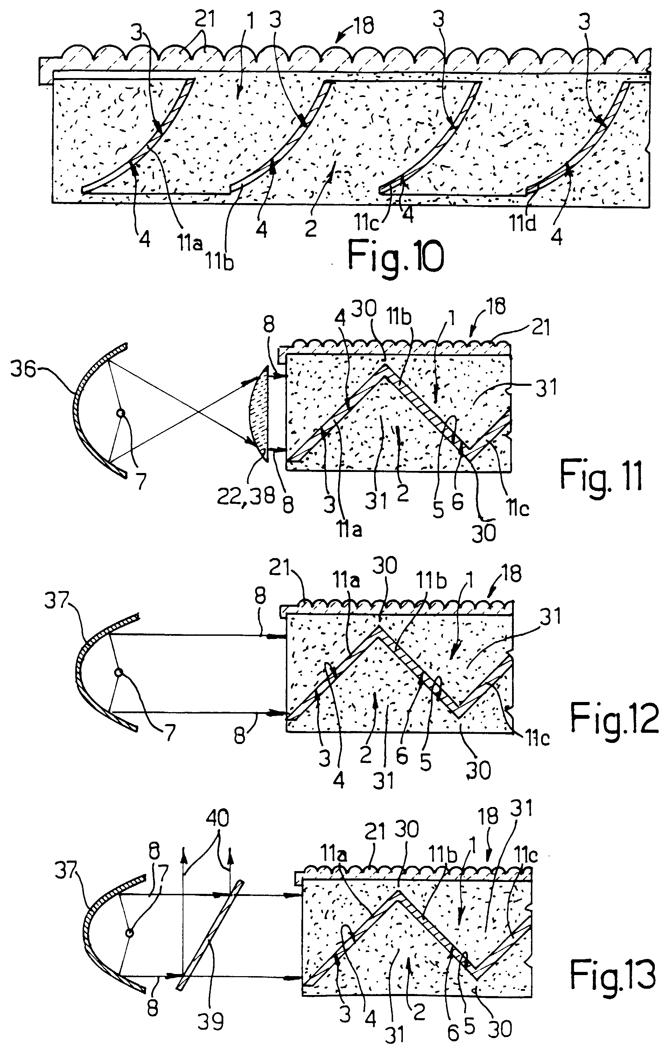

In the Figure 7 and 10 embodiments, facing surfaces 3 and 4 of light guides 1 and 2 are oriented the same way in relation to the direction of the rays; and the layers of material 11a, 11b, 11c and 11d of different structural characteristics and interposed between facing surfaces 3 and 4 are separate. In the Figure 10 embodiment, as opposed to being flat as in Figure 7, facing surfaces 3-4 are curved, so that the rays are reflected in different desired directions, and divergence of the beam emitted by the system may be controlled without a microlens assembly such as 18 in the Figure 1 embodiment.

Moreover, neither of the Figure 7 and 10 embodiments require a flat reflecting surface such as 17 in Figures 1 and 2, by virtue of the rays reflected at each interface being directed towards the same side of the light guide assembly.

The Figure 8 and 9 embodiment substantially corresponds to that in Figure 7, except that the light guides are symmetrically circular. In this case, the system substantially comprises two light guide assemblies 32 and 33, each comprising a number of substantially semicircular, coaxial light guides. Assemblies 32 and 33 are connected at a diametrical surface 34, and the facing surfaces 3-4 (Figure 9) of each guide are so oriented as to lie substantially in the same plane in relation to a ray in a substantially radial direction.

Also, light sources 7 are arranged peripherally about one of assemblies 32 and 33, as shown clearly in Figure 8, so that the rays emitted by each source impinge on the interfaces of both assemblies, as shown clearly in Figure 9.

Light source 7 may be of any type, e.g. comprising one or more incandescent, fluorescent or discharge lamps; may be punctiform, e.g. a LED type; and may be provided with an elliptical reflector 36 or a parabolic reflector 37 as shown respectively in Figures 11 and 12. In the first case, the beam is focused, so a refracting, diffracting or combined refracting-diffracting lens 38 is provided to control the divergence of the beam impinging on the light guides. In the second case, divergence may be controlled solely by the parabolic reflector.

In the event of considerable infrared emission, it may be necessary to separate the infrared component from the visible one before the light enters the light guides to prevent them overheating. In this case, the Figure 13 arrangement may be adopted, wherein an appropriate separating diffraction grating 39 is provided for separating the infrared rays 40 from those emitted by the source, and directing them in an appropriate direction.

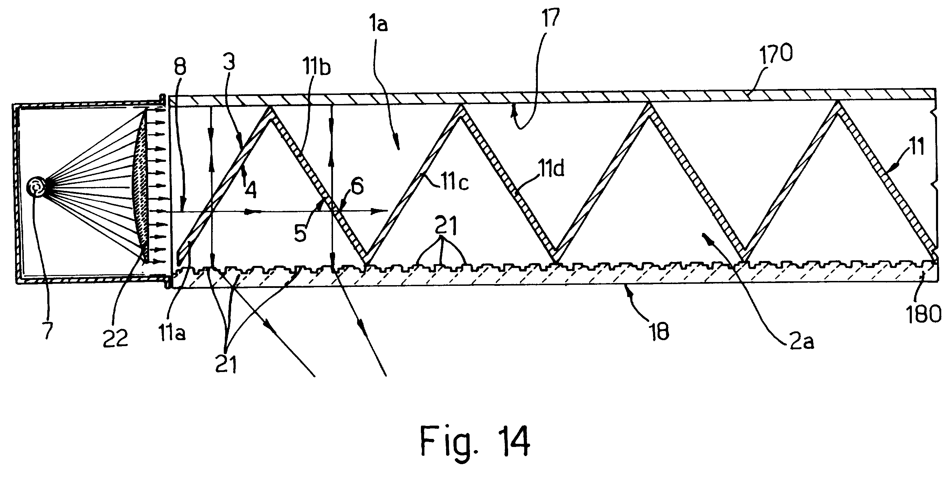

Clearly, changes may be made to the embodiments described and illustrated herein without, however, departing from the scope of the present invention. For example, with reference to the variation in Figure 14, in which any details similar or identical to those already described are indicated, for the sake of simplicity, using the same numbering system, the lighting system according to the invention may comprise a transparent screen 180 presenting an integral or applied microlens assembly 18; a rear panel 170 facing screen 180 and possibly forming part of a known cup-shaped casing (not shown), to close the front of which, screen 180 is fitted in fluidtight manner at a predetermined distance from panel 170; and an undulated element 11 located between and parallel to panel 170 and screen 180 and in the propagation direction of rays 8.

On the inside, towards screen 180, panel 170 presents reflecting surface 17; undulated element 11 is defined by pairs of facing surfaces 3-4, 5-6, by which it is divided into a number of adjacent portions 11a, 11b, 11c, 11d, ... inclined in relation to the propagation direction of rays 8 and presenting alternate opposite angles; and each of said portions 11a, 11b, ... is made of said material presenting different structural characteristics from one portion to another. For example, undulated element 11 is made in one piece, and comprises appropriately molded PMMA, for example, by forming each portion 11a, 11b, ... of a different thickness, or by injecting the material into the mold using different nozzles, so that each portion 11a, 11b, ... is formed of material with different optical characteristics.

In this embodiment, the light guides are therefore defined by respective gaps 1a, 2a, either empty or filled with a transparent fluid, normally ambient air and possibly of desired optical characteristics (in which case, each gap 1a, 2a is fluidtight), and defined respectively between undulated element 11 and panel 170, and between undulated element 11 and screen 180.

Obviously, the above embodiment may also present the Figure 8 configuration, by making panel 170 symmetrically circular.

## Claims

1. A lighting system comprising:
at least a pair of light guides (1, 2; 1a, 2a)) defining between them a number of pairs of facing surfaces (3-4, 5-6); and
a light source (7) for generating a stream of substantially parallel rays (8), the direction of said rays forming a predetermined angle with the surfaces in said pairs;
characterized in that, between the facing surfaces (3-4, 5-6) in each said pair, there is provided a partly transparent material, so that each pair of facing surfaces defines the interface between said light guides and said material; the structural characteristics of said material differing from those of the material between the facing surfaces in the following pair in the direction of said rays, so that a first portion of the light impinging on said facing surfaces in each pair is transmitted to the following pair of facing surfaces substantially in the direction of said rays, whereas a predetermined second portion of said light is reflected in a direction substantially perpendicular to the direction of said rays.

2. A lighting system as claimed in Claim 1, characterized in that it comprises an assembly (18) of microlenses located along the path of said predetermined second portion of the light reflected by said interfaces, so that the rays from said assembly present a predetermined divergence.

3. A lighting system as claimed in Claim 1 or 2, characterized in that the thickness of said material (11a, 11b, 11c) between said pairs of facing surfaces varies in predetermined manner in the direction of said rays.

4. A lighting system as claimed in Claim 1, 2 or 3, characterized in that the refraction index of said material (11a, 11b, 11c, ...) between said pairs of facing surfaces varies in predetermined manner in the direction of said rays.

5. A lighting system as claimed in one of the foregoing Claims, characterized in that the reflectance of said material (11a, 11b, 11c, ...) between said pairs of facing surfaces varies in predetermined manner in the direction of said rays.

6. A lighting system as claimed in Claim 5, characterized in that said microlenses (21) are refractive.

7. A lighting system as claimed in Claim 5, characterized in that said microlenses (21) are diffractive-refractive.

8. A lighting system as claimed in one of the foregoing Claims, characterized in that diffraction gratings (14) are provided at said interfaces..

9. A lighting system as claimed in Claim 8, characterized in that each diffraction grating comprises a supporting layer (16) from which project diffracting projections (15) with a spacing p ranging between 0.5 and 0.7 micron; the ratio of the height of said diffracting projections to the thickness of said supporting layer ranging between 0.5 and 2.

10. A lighting system as claimed in one of the foregoing Claims, characterized in that it comprises a reflecting surface (17) so located and formed as to receive said light reflected towards one side of the light guides, and to reflect it towards the opposite side.

11. A lighting system as claimed in one of the foregoing Claims, characterized in that said pairs of facing surfaces (3-4) are flat and substantially parallel.

12. A lighting system as claimed in Claim 11, characterized in that said pairs of facing surfaces (3-4) are curved; said curvature being so calculated that the rays of said predetermined second portion of reflected light present a predetermined divergence.

13. A lighting system as claimed in one of the foregoing Claims from 2 to 12, characterized in that it comprises a transparent screen (180) presenting said microlens assembly (18); a panel (170) facing and a given distance from said screen; and an undulated element (11) located between and parallel to said panel and said screen and in said direction of said rays; said undulated element (11) being defined by said pairs of facing surfaces (3-4, 5-6) by which it is divided into a number of adjacent portions (11a, 11b, 11c, 11d, ...) inclined in relation to said direction of said rays and presenting alternate opposite angles; each said portion being formed from said material, which presents different structural characteristics from one portion to another; and said light guides being defined by respective gaps (1a, 2a) either empty or filled with transparent fluid, in particular ambient air, and defined respectively between said undulated element (11) and said panel (170), and between said undulated element (11) and said screen (180).

14. A lighting system as claimed in Claim 13, characterized in that said undulated element is made in one piece and comprises appropriately molded PMMA.

15. A lighting system as claimed in one of the foregoing Claims from 1 to 12, characterized in that said light guides (1, 2) are made of plastic or glass material, and define said pairs of facing surfaces (3-4, 5-6); each pair being defined by one surface of the two guides.

16. A lighting system as claimed in Claim 15, characterized in that each said light guide comprises a flat supporting element (30) from which project prismed portions (31), each presenting a profile substantially in the form of an isosceles triangle with a constant angle at the apex; said prismed portions of the two light guides generating pairs of facing surfaces (3-4, 5-6) for alternately reflecting said second portion of the light towards one side and towards the opposite side of the guides.

17. A lighting system as claimed in Claim 16, characterized in that said prismed portions (31) increase in height in the direction of said rays.

18. A lighting system as claimed in Claim 16 or 17, characterized in that said prismed portions (31) are straight with parallel axes.

19. A lighting system as claimed in one of the foregoing Claims from 16 to 18, characterized in that said prismed portions (31) are circular and coaxial; said light source comprising a number of emitters arranged peripherally about said guides and for generating light in a substantially radial direction towards said prismed portions.

20. A lighting system as claimed in one of the foregoing Claims from 16 to 19, characterized in that said facing surfaces (3-4, 5-6) of said light guides (1, 2) lie in the same plane in relation to the direction of said rays.

21. A lighting system as claimed in Claim 20, characterized in that said facing surfaces (3-4, 5-6) are curved.

22. A lighting system as claimed in Claim 20 or 21, characterized in that said facing surfaces (3-4, 5-6) are formed on two light guide assemblies (32, 33); each assembly comprising two light guides with semicircular facing surfaces; and said two assemblies being connected at a diametrical surface (34).

23. A lighting system as claimed in one of the foregoing Claims, characterized in that, between said light source and said light guides, a separating grating (39) is provided for separating and appropriately directing the infrared rays emitted by the source.

## Patentansprüche

1. Beleuchtungssystem, mit:
wenigstens einem Paar Lichtwellenleiter (1, 2; la, 2a), zwischen denen eine Anzahl von Paaren gegenüberliegender Oberflächen (3-4, 5-6) definiert ist; und
einer Lichtquelle (7) zum Erzeugen eines Stroms im wesentlichen paralleler Strahlen (8), deren Richtung mit den Oberflächen in den Paaren einen vorgegebenen Winkel bildet;
dadurch gekennzeichnet, daß
sich in jedem Paar ein teilweise lichtdurchlässiges Material zwischen den gegenüberliegenden Oberflächen (3-4, 5-6) befindet, so daß jedes Paar gegenüberliegender Oberflächen die Grenzfläche zwischen den Lichtwellenleitern und dem Material definiert; wobei sich die Struktureigenschaften dieses Materials von jenen des Materials zwischen den gegenüberliegenden Oberflächen in dem in Richtung der Strahlen folgenden Paar unterscheiden, so daß ein erster Teil des auf die gegenüberliegenden Oberflächen in jedem Paar auftreffenden Lichts im wesentlichen in Richtung der Strahlen zu dem folgenden Paar gegenüberliegender Oberflächen durchgelassen wird, während ein vorgegebener zweiter Teil des Lichts in eine Richtung reflektiert wird, die zu der Richtung der Strahlen im wesentlichen senkrecht ist.

2. Beleuchtungssystem nach Anspruch 1, dadurch gekennzeichnet, daß es eine entlang des Wegs des vorgegebenen zweiten Teils des von den Grenzflächen reflektierten Lichts angeordnete Baugruppe (18) aus Mikrolinsen enthält, so daß die Strahlen von der Baugruppe eine vorgegebene Divergenz aufweisen.

3. Beleuchtungssystem nach Anspruch 1 oder 2, dadurch gekennzeichnet, daß sich die Dicke des Materials (11a, 11b, 11c) zwischen den Paaren gegenüberliegender Oberflächen in Richtung der Strahlen in vorgegebener Weise ändert.

4. Beleuchtungssystem nach Anspruch 1, 2 oder 3, dadurch gekennzeichnet, daß sich der Brechungsindex des Materials (11a, 11b, 11c, ...) zwischen den Paaren gegenüberliegender Oberflächen in Richtung der Strahlen in vorgegebener Weise ändert.

5. Beleuchtungssystem nach einem der vorangehenden Ansprüche, dadurch gekennzeichnet, daß sich das Reflexionsvermögen des Materials (11a, 11b, 11c,...) zwischen den Paaren gegenüberliegender Oberflächen in Richtung der Strahlen in vorgegebener Weise ändert.

6. Beleuchtungssystem nach Anspruch 5, dadurch gekennzeichnet, daß die Mikrolinsen (21) brechend sind.

7. Beleuchtungssystem nach Anspruch 5, dadurch gekennzeichnet, daß die Mikrolinsen (21) sowohl beugend als auch brechend sind.

8. Beleuchtungssystem nach einem der vorangehenden Ansprüche, dadurch gekennzeichnet, daß an den Grenzflächen Beugungsgitter (14) vorgesehen sind.

9. Beleuchtungssystem nach Anspruch 8, dadurch gekennzeichnet, daß jedes Beugungsgitter eine Trägerschicht (16) enthält, von der beugende Vorsprünge (15) mit einem Abstand p zwischen 0,5 und 0,7 Mikrometer vorstehen; wobei das Verhältnis der Höhe der beugenden Vorsprünge zur Dicke der Trägerschicht zwischen 0,5 und 2 schwankt.

10. Beleuchtungssystem nach einem der vorangehenden Ansprüche, dadurch gekennzeichnet, daß es eine reflektierende Oberfläche (17) enthält, die so angeordnet und geformt ist, daß sie das auf eine Seite der Lichtwellenleiter reflektierte Licht empfängt und auf die andere Seite reflektiert.

11. Beleuchtungssystem nach einem der vorangehenden Ansprüche, dadurch gekennzeichnet, daß die Paare der gegenüberliegenden Oberflächen (3-4) eben und im wesentlichen parallel sind.

12. Beleuchtungssystem nach Anspruch 11, dadurch gekennzeichnet, daß die Paare der gegenüberliegenden Oberflächen (3-4) gekrümmt sind; wobei die Krümmung so berechnet ist, daß die Strahlen des vorgegebenen zweiten Teils des reflektierten Lichts eine vorgegebene Divergenz bieten.

13. Beleuchtungssystem nach einem der vorstehenden Ansprüche 2 bis 12, dadurch gekennzeichnet, daß es einen lichtdurchlässigen Schirm (180), der die Mikrolinsenbaugruppe (18) darstellt; eine dem Schirm in einem gegebenen Abstand gegenüberliegende Platte (170); sowie ein wellenförmiges Element (11) enthält, das zwischen der Platte und dem Schirm zu diesen parallel und in Richtung der Strahlen angeordnet ist; wobei das wellenförmige Element (11) durch die Paare der gegenüberliegenden Oberflächen (3-4, 5-6) definiert ist, durch die es in eine Anzahl angrenzender Abschnitte (11a, 11b, 11c, 11d,...) geteilt wird, die in bezug auf die Richtung der Strahlen geneigt sind und abwechselnd gegenüberliegende Winkel bieten; wobei jeder Abschnitt aus dem Material geformt ist, das von einem Abschnitt zum anderen unterschiedliche Struktureigenschaften bietet; und wobei die Lichtwellenleiter durch jeweilige Zwischenräume (la, 2a) definiert sind, die entweder leer oder mit einem lichtdurchlässigen Fluid, insbesondere mit Umgebungsluft, gefüllt sind und die zwischen dem wellenförmigen Element (11) und der Platte (170) bzw. zwischen dem wellenförmigen Element (11) und dem Schirm (180) definiert sind.

14. Beleuchtungssystem nach Anspruch 13, dadurch gekennzeichnet, daß das wellenförmige Element in einem Stück hergestellt ist und geeignet geformtes PMMA enthält.

15. Beleuchtungssystem nach einem der vorstehenden Ansprüche 1 bis 12, dadurch gekennzeichnet, daß die Lichtwellenleiter (1, 2) aus einem Kunststoff- oder Glasmaterial hergestellt sind und die Paare gegenüberliegender Oberflächen (3-4, 5-6) definieren; wobei jedes Paar durch eine Oberfläche der zwei Leiter definiert ist.

16. Beleuchtungssystem nach Anspruch 15, dadurch gekennzeichnet, daß jeder Lichtwellenleiter ein ebenes Trägerelement (30) enthält, von dem Prismenabschnitte (31) vorstehen, wobei jeder ein Profil darstellt, das im wesentlichen die Form eines gleichschenkligen Dreiecks mit einem konstanten Scheitelwinkel hat; wobei die Prismenabschnitte der zwei Lichtwellenleiter Paare gegenüberliegender Oberflächen (3-4, 5-6) zum abwechselnden Reflektieren des zweiten Teils des Lichts auf eine Seite und auf die gegenüberliegende Seite der Leiter darstellen.

17. Beleuchtungssystem nach Anspruch 16, dadurch gekennzeichnet, daß die Höhe der Prismenabschnitte (31) in Richtung der Strahlen zunimmt.

18. Beleuchtungssystem nach Anspruch 16 oder 17, dadurch gekennzeichnet, daß die Prismenabschnitte (31) gerade und ihre Achsen parallel sind.

19. Beleuchtungssystem nach einem der vorstehenden Ansprüche 16 bis 18, dadurch gekennzeichnet, daß die Prismenabschnitte (31) kreisförmig und koaxial sind; wobei die Lichtquelle eine Anzahl von Strahlern enthält, die peripher um die Leiter und zum Erzeugen von Licht in einer im wesentlichen radialen Richtung zu den Prismenabschnitten angeordnet sind.

20. Beleuchtungssystem nach einem der vorangehenden Ansprüche 16 bis 19, dadurch gekennzeichnet, daß die gegenüberliegenden Oberflächen (3-4, 5-6) der Lichtwellenleiter (1, 2) in bezug auf die Richtung der Strahlen in der gleichen Ebene liegen.

21. Beleuchtungssystem nach Anspruch 20, dadurch gekennzeichnet, daß die gegenüberliegenden Oberflächen (3-4, 5-6) gekrümmt sind.

22. Beleuchtungssystem nach Anspruch 20 oder 21, dadurch gekennzeichnet, daß die gegenüberliegenden Oberflächen (3-4, 5-6) auf zwei Lichtwellenleiterbaugruppen (32, 33) gebildet sind; wobei jede Baugruppe zwei Lichtwellenleiter mit halbkreisförmigen gegenüberstehenden Oberflächen enthält; und wobei die zwei Baugruppen an einer diametralen Oberfläche (34) miteinander verbunden sind.

23. Beleuchtungssystem nach einem der vorstehenden Ansprüche, dadurch gekennzeichnet, daß zwischen der Lichtquelle und den Lichtwellenleitern ein Trenngitter (39) zum Trennen und zum geeigneten Lenken der von der Quelle emittierten Infrarotstrahlen vorgesehen ist.

## Revendications

1. Système d'éclairage comprenant :
au moins un couple de guides de lumière (1,2; la,2a) définissant entre eux un certain nombre de couples de surfaces (3-4, 5-6) situées en vis-à-vis; et
une source de lumière (7) servant à produire un faisceau de rayons sensiblement parallèles (8), la direction desdits rayons faisant un angle prédéterminé avec les surfaces desdits couples de surfaces;
caractérisé en ce que dans chacun desdits couples un matériau partiellement transparent est prévu entre les surfaces en vis-à-vis (3-4, 5-6) de sorte que chaque couple de surfaces en vis-à-vis définit l'interface entre lesdits guides de lumière et ledit matériau; les caractéristiques structurelles dudit matériau étant différentes de celles du matériau situé entre les surfaces en vis-à-vis dans le couple suivant dans la direction desdits rayons, de sorte qu'une première partie de la lumière rencontrant lesdites surfaces en vis-à-vis dans chaque couple est transmise au couple suivant de surfaces en vis-à-vis, sensiblement dans la direction desdits rayons, tandis qu'une seconde partie prédéterminée de ladite lumière est réfléchie dans une direction sensiblement perpendiculaire à la direction desdits rayons.

2. Système d'éclairage selon la revendication 1, caractérisé en ce qu'il comprend un ensemble (18) de micro-lentilles disposées le long du trajet de ladite seconde partie prédéterminée de la lumière réfléchie par lesdites interfaces de sorte que les rayons provenant dudit ensemble présentent une divergence prédéterminée.

3. Système d'éclairage selon la revendication 1 ou 2, caractérisé en ce que l'épaisseur dudit matériau (11a,11b,11c) entre lesdits couples de surfaces en vis-à-vis varient d'une manière prédéterminée dans la direction desdits rayons.

4. Système d'éclairage selon la revendication 1, 2 ou 3, caractérisé en ce que l'indice de réfraction dudit matériau (11a,11b,11c, ...) entre lesdits couples de surfaces en vis-à-vis varie d'une manière prédéterminée dans la direction desdits rayons.

5. Système d'éclairage selon l'une des revendications précédentes, caractérisé en ce que le coefficient de réflexion dudit matériau (11a,11b,11c, ...) entre lesdits couples de surfaces en vis-à-vis varie d'une manière prédéterminée dans la direction desdits rayons.

6. Système d'éclairage selon la revendication 5, caractérisé en ce que lesdites micro-lentilles (21) sont réfringentes.

7. Système d'éclairage selon la revendication 5, caractérisé en ce que lesdites micro-lentilles (21) sont diffractives - réfringentes.

8. Système d'éclairage selon l'une quelconque des revendications précédentes, caractérisé en ce que des réseaux de diffraction (14) sont disposés au niveau desdites interfaces.

9. Système d'éclairage selon la revendication 8, caractérisé en ce que chaque réseau de diffraction comprend une couche de support (16), à partir de laquelle font saillie des parties saillantes de diffraction (15) avec un espacement p compris entre 0,5 et 0,7 micromètre; le rapport de la hauteur desdites parties saillantes de diffraction à l'épaisseur de ladite couche de support étant compris entre 0,5 et 2.

10. Système d'éclairage selon l'une des revendications précédentes, caractérisé en ce qu'il comprend une surface réfléchissante (17) disposée et agencée de manière à recevoir ladite lumière réfléchie en direction d'un côté des guides de lumière et à la réfléchir en direction du côté opposé.

11. Système d'éclairage selon l'une quelconque des revendications précédentes, caractérisé en ce que lesdits couples de surfaces en vis-à-vis (3-4) sont planes et essentiellement parallèles.

12. Système d'éclairage selon la revendication 11, caractérisé en ce que lesdits couples de surfaces situés en vis-à-vis (3-4) sont courbes; ladite courbure étant calculée de telle sorte que les rayons de ladite seconde partie prédéterminée de la lumière réfléchie présentent une divergence prédéterminée.

13. Système d'éclairage selon l'une des revendications précédentes 2 à 12, caractérisé en ce qu'il comprend un écran transparent (180) présentant ledit ensemble de micro-lentilles (18); un panneau (170) situé en vis-à-vis et à une distance donnée dudit écran; et un élément ondulé (11) situé entre les panneaux et ledit écran et parallèle à ces éléments et dans ladite direction desdits rayons; ledit élément ondulé (11) étant défini par lesdits couples de surfaces en vis-à-vis (3-4, 5-6), par lesquelles il est subdivisé en un certain nombre de parties adjacentes (11a,11b,11c,11d, ...) inclinées par rapport à ladite direction dudit rayon et présentant des angles opposés alternés; chacune desdites parties étant formées dudit matériau qui présente des caractéristiques structurelles différentes d'une partie à l'autre; et lesdits guides de lumière étant définis par des intervalles respectifs (1a,2a) vides ou remplis par un fluide transparent, en particulier l'air ambiant, et définis respectivement entre ledit élément ondulé (11) et ledit panneau (170) et entre ledit élément ondulé (11) et ledit écran (180).

14. Système d'éclairage selon la revendication 13, caractérisé en ce que ledit élément ondulé est formé d'un élément et comprend du PMMA moulé de façon appropriée.

15. Système d'éclairage selon l'une des revendications précédentes 1 à 12, caractérisé en ce que lesdits guides de lumière (1,2) sont réalisés en matière plastique ou en verre et définissent lesdits couples de surfaces en vis-à-vis (3-4, 5-6); chaque couple étant défini par une surface des deux guides.

16. Système d'éclairage selon la revendication 15, caractérisé en ce que chacun desdits guides de lumière comprend un élément de support plat (30), d'où font saillie des parties prismatiques (31) dont chacune présente un profil sensiblement sous la forme d'un triangle isocèle avec un angle au sommet constant; lesdites parties prismatiques des deux guides d'ondes formant des couples de surfaces en vis-à-vis (3,4,5,6) servant à réfléchir alternativement ladite seconde partie de la lumière vers un côté et vers l'autre côté des guides.

17. Système d'éclairage selon la revendication 16, caractérisé en ce que la hauteur desdites parties prismatiques (31) augmente dans la direction desdits rayons.

18. Système d'éclairage selon la revendication 16 ou 17, caractérisé en ce que lesdites parties prismatiques (31) sont rectilignes, avec des axes parallèles.

19. Système d'éclairage selon l'une des revendications précédentes 16 à 18, caractérisé en ce que lesdites parties prismatiques (31) sont circulaires et coaxiales; ladite source de lumière comprenant un certain nombre d'émetteurs disposés sur la périphérie autour desdits guides et servant à produire une lumière dans une direction sensiblement radiale vers lesdites parties prismatiques.

20. Système d'éclairage selon l'une des revendications précédentes 16 à 19, caractérisé en ce que lesdites surfaces en vis-à-vis (3-4, 5-6) desdits guides de lumière (1,2) sont situées dans le même plan par rapport à la direction desdits rayons.

21. Système d'éclairage selon la revendication 20, caractérisé en ce que lesdites surfaces en vis-à-vis (3-4, 5-6) sont courbes.

22. Système d'éclairage selon la revendication 20 ou 21, caractérisé en ce que lesdites surfaces en vis-à-vis (3-4, 5-6) sont formées sur deux ensembles de guides de lumière (32,33); chaque ensemble comprenant deux guides de lumière possédant des surfaces semi-circulaires en vis-à-vis; et lesdits deux ensembles étant connectés au niveau d'une surface diamétrale (34).

23. Système d'éclairage selon l'une des revendications précédentes, caractérisé en ce qu'entre ladite source de lumière et lesdits guides de lumière est prévu un réseau de séparation (39) servant à séparer et diriger de façon appropriée les rayons infrarouges émis par la source.
